# EUROPEAN PATENT SPECIFICATION

(11) **EP 4 157 934 B1**
(45) Date of publication and mention of the grant of the patent: **09.10.2024**
(21) Application number: 21734761.6
(22) Date of filing: 31.05.2021
(51) Int. Cl.: C08L 11/00, C08K 3/00, C08K 3/06

(54) **VULCANISABLE COMPOSITION FOR FORMING A NITROSAMINE FREE SULPHUR MODIFIED POLYCHLOROPRENE VULCANISATE**
VULKANISIERBARE ZUSAMMENSETZUNG ZUR FORMUNG EINES MIT NITROSAMINFREIEM SCHWEFEL MODIFIZIERTEN POLYCHLOROPRENVULKANISATS
COMPOSITION VULCANISABLE POUR FORMER UN VULCANISAT DE POLYCHLOROPRÈNE DE SOUFRE MODIFIÉ SANS NITROSAMINE

(30) Priority: 02.06.2020 EP 20177870
(43) Date of publication of application: 05.04.2023
(73) Proprietor: ARLANXEO Deutschland GmbH, 41540 Dormagen (DE)
(72) Inventor: SARY, Nicolas, 41542 Dormagen (DE); STANGE, Heiner, 51379 Leverkusen (DE); LIEBER, Susanna, 67663 Kaiserslautern (DE); TASCHNER, Frank, 40789 Monheim-Baumberg (DE)
(86) International application number: PCT/EP2021/064503
(87) International publication number: WO 2021/245011

(56) References cited:
- WO-A1-2011/163662
- DE-T5- 112013 004 849
- US-A- 5 483 006

## Description

### Field of Invention

The present invention relates to a nitrosamine free sulphur modified polychloroprene. In particular the present invention relates to a vulcanisable composition for forming the nitrosamine free sulphur modified polychloroprene. Furthermore, the present invention relates to a method of manufacturing a nitrosamine free sulphur modified polychloroprene vulcanisate; finally the present invention relates to a vulcanisate therefrom.

### Background of Invention

Sulphur modified polychloroprene rubbers are used in a wide range of applications as they exhibit excellent dynamic properties.

US 9,475,895 B2 discloses that sulphur modified polychloroprene rubber can be peptised in a latex using tetraalkyl thiuram disulphide (TATD). However, the TATD generates volatile n-nitrosamines. N-nitrosamines are genotoxic and carcinogenic. TATD sulphur modified polychloroprene rubbers are produced with a relatively high molecular weight and then, due to the combination of copolymerised sulphur and TATD, they can be masticated during compounding. A reduction of Mooney viscosity during mixing results in an excellent dispersion and facilitates an easy process-ability of the final product. The TATD sulphur modified polychloroprene rubbers are in use since many years and many vulcanisable mixtures have been developed to optimise crosslinking speeds of the TATD sulphur modified polychloroprene rubbers to the need of the processing equipment used.

Nitrosamine free sulphur modified polychloroprene is generally known in the art.

US 5,483,006 discloses that chloroprene/sulphur copolymers peptised either by xanthogen sulphides alone or in combination with mercaptobenzothiazole in an alkaline dispersion in the absence of nitrosamine forming additives (e.g. octamine). Metal oxides are the usual curing agents. According to the process of US 5,483,006, a copolymer of chloroprene and sulphur regulated by diisopropylxanthogendisulphide (DIXD) is obtained. The chloroprene/sulphur copolymers have an undesirably high Mooney viscosity. Furthermore a crosslinking of the resultant chloroprene/sulphur copolymers is slow and of thus of low efficiency.

U.S. 3,984,609 discloses the peptisation of chloroprene/sulphur copolymers, polymerised in the presence of a modifying agent such a dialkylxanthogen disulphide, by adding to alkaline latexes of such copolymers a modifying agent which is a thiol of the formula R-SH wherein R includes, amongst other groups, an arylthiazole to give mercaptobenzothiazole as the modifying agent. Residual mercaptan amounts in the final polymer (nDDM is classified as dangerous substance) and should be avoided.

JP 2002060550 discloses a halogen containing rubber composition in which a thiourea vulcanisation accelerator is substituted with specific additives. The halogen containing rubber composition is obtained by admixing a substituted or unsubstituted thiazolidinethione-2 and a compound bearing an imidazole group and, when necessary, a diazabicyclo group to the halogen-containing rubber. In particular, JP 2002060550 discloses a chloroprene rubber which is a sulphur-modified type, a mercaptan-modified type, and a xanthogen-modified type, depending on the type of molecular weight regulator.

US 5 483 006 A describes a process for curing chloroprene/sulfur copolymers which do not form nitrosamines. While octamine is mentioned the document is silent regarding the use of polycyclic amines.

WO 2011/163662 describes a vulcanizable composition comprising a sulfur-modified polychloroprene copolymer polymerized at least from chloroprene, elemental sulfur and a xanthogen disulphide. It does not contain or teaches in any way the use of bi- or polycyclic amines.

Due to the detrimental effects of nitrosamines to human health, there is a continuous need to further develop vulcanisable compositions for a nitrosamine free sulphur modified polychloroprene that need to overcome the problems of the prior art. There is a need for vulcanisable compositions for a nitrosamine free sulphur modified polychloroprene with enhanced crosslinking speeds, compatibility with processing equipment, exhibit a positive process-ability with regards to viscosity and which at the same time maintain at least comparable mechanical and/or physical properties in a vulcanisable composition and/or as final product as vulcanisate.

The aforementioned problems are addressed by the present invention.

### Summary of Invention

In a first aspect the present invention relates to a vulcanisable composition for forming a nitrosamine free sulphur modified polychloroprene vulcanisate. The vulcanisable composition comprises at least:
- a sulphur-modified polychloroprene copolymer polymerised at least from chloroprene, elemental sulphur and a xanthogen disulphide; and
- at least one non-nucleophilic base wherein the non-nucleophilic base is a bi-or polycyclic amine base, which comprises two, or more than two, joined rings.

In a further aspect the present invention relates to a method of manufacturing a nitrosamine free sulphur modified polychloroprene vulcanisate. The method comprising the steps of:
a) polymerising chloroprene in a presence of elemental sulphur and a xanthogen disulphide to form a sulphur-modified polychloroprene; and
b) vulcanising the sulphur-modified polychloroprene formed in step a) in the presence of at least one non-nucleophilic base to form the nitrosamine free sulphur modified polychloroprene vulcanisate, wherein the non-nucleophilic base is a bi-or polycyclic amine base, which comprises two, or more than two, joined rings.

### Detailed Description

For a complete understanding of the present invention and the advantages thereof, reference is made to the following detailed description.

It should be appreciated that the various aspects and embodiments of the detailed description as disclosed herein are illustrative of the specific ways to make and use the invention and do not limit the scope of invention when taken into consideration with the claims and the detailed description. It will also be appreciated that features from different aspects and embodiments of the invention may be combined with features from different aspects and embodiments of the invention.

In a first aspect the present invention relates to a vulcanisable composition for forming a nitrosamine free sulphur modified polychloroprene vulcanisate. The vulcanisable composition comprising:
- a sulphur-modified polychloroprene copolymer polymerised at least from chloroprene, elemental sulphur and a xanthogen disulphide; and
- at least one non-nucleophilic base wherein the non-nucleophilic base is a bi-or polycyclic amine base, which comprises two, or more than two, joined rings.

Polychloroprene (chloroprene rubber or CR) is a polymer of at least chloroprene (2-chloro-1,3-butadiene). A manufacture of polychloroprene can be carried out by emulsion polymerisation of chloroprene as described for e.g. in P. R. Johnson, Rubber Chemistry and Technology (1976), Vol 49, Issue 3, pages 650 - 702, the teachings of which are incorporated herein by reference.

Polychloroprene is known for its mechanical and dynamic properties, resistance to ageing and solvents as well its superior flame resistance. Sulphur-modified polychloroprene is also known in the art and provides further advantages such as impact resilience, superior tear strength and flex fatigue resistance.

The vulcanisable composition comprises the sulphur-modified polychloroprene copolymer. The sulphur-modified polychloroprene copolymer is formed from a polymerisation of chloroprene and elemental sulphur by so-called free radical emulsion polymerisation and then further subjected to a bond cleavage by peptisation using a chain transfer agent such as xanthogen disulphide. The chain transfer agent is added directly to the emulsion to control a molecular weight and simultaneously as act as a peptising agent during and/or after emulsion polymerisation and/or ageing of a latex and a formed solid.

The xanthogen disulphide, can comprise non-ionic ether compounds. The xanthogen disulphide may be a dialkylxanthogen disulphides such as diisopropylxanthogendisulphide (DIXD). The sulphur-modified chloroprene copolymer is polymerised in the presence of the xanthogen disulphide, the xanthogen disulphide being present in an amount of ≤ 0.4 phm and particularly of > 0 phm at the start of the polymerisation reaction. According to this embodiment, it may be allowed to reach a further decrease in Mooney viscosity which provides further enhanced process-ability. In particular, it could be seen that the Mooney viscosity is significantly improved where the xanthogen disulphide is present at the beginning of the polymerisation in the before-defined amount of ≤ 0.4 phm. However, viscosity is still high enough so that good filler dispersion, processing and mechanical properties are still given. The xanthogen disulphide is present in an amount of < 1 phm due to the addition of further xanthogen disulphide at reaction termination.

The at least one non-nucleophilic base is a bi-or polycyclic amine base, which comprises two, or more than two, joined rings and is thus a sterically hindered organic base that is a poor nucleophile. The at least one non-nucleophilic base may be present in an amount of ≥ 0.05 phr to ≤ 5 phr, preferably in an amount of ≥ 1.5 phr to ≤ 2 phr. The minimal amount are necessary for reducing Mooney viscosity and tailoring a crosslinking density and speed, at the maximum amounts the scorch is too high and not suitable. Optimal results are observed in the amount of ≥ 1.5 phr to ≤ 2 phr leading to advantageous reduction in Mooney viscosity, compression set and cross-linking speed and an increase in crosslinking density in the vulcanisate.

The at least one non-nucleophilic base is a bi-or polycyclic amine base, comprise two (bi), or more than two (poly), joined rings (cyclic), such as three, four or even more than four joined rings. The rings are preferably primarily formed of carbon. However, the rings may comprise at least one heteroatom. The at least one heteroatom may be nitrogen. The bi-or polycyclic ring structure or respective ring substructures may for example include cycloalkanes, aromatics, and other ring types. The rings be provided in sizes of three atoms and upward, and in combinations of linkages that are formed fused and thus are linked in edge-to-edge linkages. Further, polycyclic may comprise bicyclic, tricyclic, tetracyclic, i.e. more than one ring. It is preferred that the bi-or polycyclic amine base comprises Diazabicyclo compounds and thus compounds, which are formed as a bicyclo-fused-structure, in which two nitrogen atoms are included in the ring structure. Regarding the ring structure and in particular the subring structure and thus the structure of each of the polycyclic ring, it is preferred that each subring structure is formed of 5 to 8 members, such as 6 to 7 members. Therefore, in case of a diaza ring structure, it may be preferred that each sub ring structure comprises 2 nitrogen atoms as heteroatoms and a respective amount of carbon atoms to come to the above-defined amount or members of the ring structure. With regard to the nitrogen atoms, it may be preferred that one or more than one nitrogen atoms are part of only one ring structure or are part of more than one ring structure. Where the at least one non-nucleophilic base is the amide, this is preferably selected from lithium diisoproylamide. The at least one non-nucleophilic base is preferably Di-tert-butylpyridine. The at least one non-nucleophilic base is preferably N, N-Diisopropylethylamine. The at least one non-nucleophilic base is preferably selected from at least one of (1,4-diazabicyclo[2.2.2]octane) (DABCO), 1,8-Diazabicyclo[5.4.0]undec-7-ene (DBU), and 1,5-Diazabicyclo[4.3.0]non-5-ene (DBN).

The vulcanisable composition may further comprise at least one crosslinking agent. The at least one crosslinking agent can be a metal oxide selected from the group consisting of zinc oxide, magnesium oxide, lead oxide, trilead tetroxide, iron trioxide, titanium dioxide, calcium oxide and hydrotalcite, or any combination thereof.

The vulcanisable composition may also comprise at least one additive or any combination thereof known to a person skilled in the art. The at least one additive can be a heat ageing stabiliser, a processing aid, a plasticiser and a filler. The filler can be a mineral filler, carbon black ranging from N110 to N990, carbon nanotube(s), graphite and aramid fibres. The at least one additive can be used in an amount of 0.5 phr to 200 phr.

The vulcanisable composition shows a reduced Mooney viscosity after mixing. The reduced Mooney viscosity allows an improved process-ability. Therefore, the significant advantages of a vulcanisable composition for forming a nitrosamine free sulphur modified polychloroprene vulcanisate and a vulcanisate obtained therefrom, according to the present invention facilitate its use in desired applications, such as textile coatings, calendaring, the manufacture of belts, anti-vibration dampeners, foamed goods such as isolation and diving suits.

Apart from the reduced Mooney viscosity, it was found that the vulcanisate obtained therefrom had at least comparable mechanical properties desired in the art, such as tensile strength, elongation at break and compression set. Therefore, the improved process-ability due to reduced Mooney viscosity is reached in combination with still advantageous mechanical properties.

Furthermore, a controllable crosslinking density is advantageous depending on the application (e.g. hoses, springs require a low compression set with high crosslinking) and a cure speed could be increased, which is a further efficient measure for improving the properties of the vulcanisate obtained therefrom.

It was surprisingly found that according to the present invention the aforementioned advantages are met.

The sulphur-modified polychloroprene copolymer vulcanisate may be formed in the presence of an at least one accelerator. Thus, the vulcanisable composition may comprise the at least one accelerator. Using the at least one accelerator can further reduce the Mooney viscosity and adjusts the crosslinking density and speed when forming the vulcanisate.

The at least one accelerator can be at least one of a thiazole compound, a carbamate compound and a thiuram compound or any combination thereof.

The thiazole compound can be thiazole-based compounds such as MBT (2-mercaptobenzothiazole), MBTS (dibenzothiazyl disulphide), a sodium salt, a zinc salt or a copper salt of 2-mercaptobenzothiazole, a cyclohexylamine salt, 2-(2,4-dinitrophenyl)mercaptobenzothiazole, and 2-(2,6-diethyl-4-morpholinothio)benzothiazole can be used. The thiazole compound is preferably mercaptobenzothoazole (MBTS).

The carbamate compound can be a dithiocarbamate, such as zinc dimethyl dithiocarbamate (ZDMC), zinc diethyl dithiocarbamate (ZDEC), zinc dibutyldithiocarbamate (ZDBC), zinc ethyl phenyldithiocarbamate (ZEPC), zinc dibenzyl dithiocarbamate (ZDBC), zinc pentamethylene dithiocarbamate (ZPD), zinc-N-pentamethylene dithiocarbamate (Z5MC), zinc dialkyl dithiophosphate (ZDT), zinc-2-ethyl hexanoate (ZEH), zinc dinonyl dithiocarbamate (ZNDNC), bismuth dimethyl dithiocarbamate (BIDD), Nickeldibutyldithiocarbamate (NDBC), Seleniumdiethyldithiocarbamate (SeEDC), Selenium dimethyl dithiocarbamate (SeDMC), sodium diethyl dithiocarbamate (SEDC), tellurium diethyl dithiocarbamate (TeEDC), tellurium diethyl dithiocarbamate (TeDEC), sodium dimethyl dithiocarbamate (SMDC) and sodium dibutyl dithiocarbamate (SBC).

The thiuram compound can be a thiuram disulphide or a thiuram polysulphide may be used. The thiuram disulphide is preferably tetrabenzylthiurame disulphide (TBzTD). The thiuram polysulphide dipentamethylenethiurame hexasulphide (DPTH), Dipentamethylenethiurame monosulphide (DPTM), dipentamethylenethiurame disulphide (DPTD), N,N'-diethyl-N,N'-diphenylthiurame disulphide (EPTDM) and dimethyldiphenylthiurame disulphide (MPTD).

It is preferred that the at least one accelerator is a combination of the thiazole compound mercaptobenzothoazole (MBTS) and the thiuram compound tetrabenzylthiurame disulphide (TBzTD).

The sulphur-modified polychloroprene copolymer may further comprise 2,3-dichloro-1,3-butadiene (DCB) monomer units. An amount of 2,3-dichloro-1 ,3-butadiene (DCB) is in a range of greater than 0 and up to 10 %wt of the sulphur-modified polychloroprene copolymer. According to this embodiment, low crystallizing grades for use at low temperatures can be provided since the 2,3-dichloro-1,3-butadiene (DCB) reduces a speed and extent of crystallisation of the resultant copolymer.

Preferably, the sulphur-modified polychloroprene copolymer is formed in the presence of elemental sulphur at the start of the polymerisation reaction in an amount of ≥ 0.2 phm. In other words, when forming the copolymer and thus when polymerising the monomer units, elemental sulphur is added before or at the start of the polymerisation reaction and thus before the polymerisation reaction starts. This embodiment may thus show a respective amount of sulphur containing links in the final product. According to this embodiment, it may be allowed to reach an especially effective decrease in Mooney viscosity. Furthermore, mechanical properties of the copolymer are improved compared to an embodiment in which sulphur is present in an amount of 0.2 phm or less. In particular, it is seen that the tensile strength is improved in case sulphur is present at the beginning of the polymerisation in the aforementioned defined amount.

With regard to the provision of sulphur, it is further preferred that the sulphur-modified chloroprene copolymer is prepared in the presence of elemental sulphur at the start of the polymerisation reaction in an amount of ≤ 1 phm. In other words, again, when forming the copolymer and thus when polymerising the monomer units, elemental sulphur is added at, or before the start of the polymerisation reaction and thus before the polymerisation reaction starts. According to this embodiment peptisation or Mooney viscosity decrease upon milling (process-ability) can be improved. However, viscosity is still high enough so that good dispersion, processing and mechanical properties are still provided. Further, aging properties are improved according to this embodiment.

In a further aspect the present invention relates to a method of manufacturing a nitrosamine free sulphur modified polychloroprene vulcanisate. The method comprising the steps of:
a) polymerising chloroprene in a presence of elemental sulphur and a xanthogen disulphide to form a sulphur-modified polychloroprene; and
b) vulcanising the sulphur-modified polychloroprene formed in step a) in the presence of at least one non-nucleophilic base to form the nitrosamine free sulphur modified polychloroprene vulcanisate, wherein the non-nucleophilic base is a bi-or polycyclic amine base, which comprises two, or more than two, joined rings.

The method provides a composition during step b) which exhibits a reduced Mooney viscosity which allows an improved process-ability of the composition. Therefore, the significant advantages of the nitrosamine free sulphur modified polychloroprene according to the invention may be applied to a plurality of applications.

Apart from the reduced Mooney viscosity, it was found that the nitrosamine free sulphur modified polychloroprene vulcanisate formed by the method has at least comparable mechanical properties, such as tensile strength, elongation at break and compression set. Therefore, the improved process-ability due to the reduced Mooney viscosity is reached in combination with still desired mechanical properties.

Apart from that, it was further found that the crosslinking density and the cure speed could be adjusted by the method as described, which is a further efficient measure for improving the properties of the vulcanised product.

It may further be preferred that the sulphur-modified polychloroprene copolymer is formed in the presence of an at least one accelerator, or any combination thereof selected from at least one of a thiazole compound, a carbamate compound and a thiuram compound, as noted previously.

Further preferred, sulphur is present in an amount of ≥ 0.2 phm, in particular to < 1 phm at the start of the polymerisation reaction. Particularly, a respective amount of sulphur is added to the polymerisation mixture before the polymerisation reactions starts. According to this embodiment, it may be allowed to reach an especially effective decrease in Mooney viscosity when mixed with the non-nucleophilic base, allowing an especially preferred process-ability. Apart from that, the mechanical properties of the copolymer are improved compared to an embodiment in which sulphur is present in a lower amount and such in an amount of 0.2 phm or less. In particular, it could be seen that the tensile strength is improved in case sulphur is present at the beginning of the polymerisation in the before-defined amount.

In a further embodiment step a) is performed in the presence of dichloro-2,3-butadiene (DCB) as further monomer unit. This allows that the sulphur-modified chloroprene copolymer may further preferably be a copolymer comprising dichloro-2,3-butadiene (DCB) monomer units. For example, the copolymer which is present in the vulcanisable composition may be a terpolymer which consists of the before-named monomer units, i.e. sulphur, chloroprene and dichloro-2,3-butadiene.

Furthermore, the xanthogen disulphide may preferably be present in an amount of ≤ 0.4 phm at the start of the polymerisation reaction. Thus, the xanthogen disulphide may be added to the polymerisation mixture before the start of the polymerisation reaction. This embodiment allows to reach a decrease in Mooney viscosity which provides an especially good process-ability.

The at least one non-nucleophilic base can be those as previously mentioned.

The at least one non-nucleophilic base may be present in an amount of ≥ 0.05 phr to ≤ 5 phr, preferably in an amount of ≥ 1.5 phr to ≤ 2 phr before the vulcanisation reaction.

In order to allow forming a nitrosamine-free polychloroprene rubber, the method is performed free of a nitrosamine forming compounds i.e. conventional accelerator.

Regarding further advantages and features of the method of forming a nitrosamine free sulphur modified polychloroprene, it is referred to the vulcanisable composition, the vulcanisate as well as to the examples.

Further described are vulcanisates formed from a vulcanisable composition or by a method as described above.

The vulcanisates thus according to the invention have an improved process-ability and thus facilitate a broad application range. This is shown particularly by high viscosity at the beginning of the mixing allowing to disperse fillers efficiently and further by a low viscosity at the end to allow for easy calendaring, textile coating and further applications. Further, cure properties are improved compared to standard chloroprene/sulphur copolymers. For example, when cured with conventional metal oxide curing agents, the nitrosamine precursor-free peptised copolymer shows slow curing. In addition, the final copolymer does not achieve an equivalent state of cure. Scorch is undesirable as the vulcanisation is undesirably fast at the start giving a small processing window which renders process-ability ineffective as it blocks the processing apparatus.

The present invention is demonstrated by the following non-limiting examples.

### Examples

"phr" means parts per hundred parts of rubber (weight) for the vulcanisate. The entirety of all of the elastomer components, comprising the chloroprene rubber, corresponds to 100 phr.

"phm" means parts per hundred of monomer. As used for the polymerisation recipe, the monomers amount (i.e. chloroprene and possibly co-monomers) corresponds to 100phm.

Crosslinking density (MDR) was determined with a moving die rheometer (MDR 2000E), using an angle of 0.5° and an oscillation frequency of 1.7 Hz at 170°C for 40 minutes.

For tensile strength (TS), 2 mm sheets were produced by vulcanisation of the vulcanisable mixture at 170°C. The dumbbell-shaped test samples were punched out from the sheets. Tensile strength and elongation at break (EB) were determined in accordance with ASTM D2240-81.

Hardness was determined with a durometer in accordance with ASTM D2240-81.

Compression set (CS) was determined in accordance with DIN ISO 850 Part A.

Goodrich test (MTS) DIN 53533 T3 -88 Goodrich; 400Hz - Elastomer-Prüfsystem 831.20; from MTS Systems GmbH.

Mooney viscosity was determined in accordance with ML1+4/100°C, DIN ISO 289-1.

**Table 1: Variation in experimental CR grades CR 1 to 8**

| Ex. | Chloroprene (wt%-monomer) | Dichloro-2,3-butadiene (wt% monomer) | DIXD start (phm) | DIXD end (phm) | sulphur start (phm) | sulphur end (phm) |
|---|---|---|---|---|---|---|
| CR-1 | 100 | 0 | 0.15 | 0.55 | 0.4 | 0.0 |
| CR-2 | 100 | 0 | 0.15 | 0.55 | 0.3 | 0.1 |
| CR-3 | 100 | 0 | 0.15 | 0.55 | 0.2 | 0.2 |
| CR-4 | 100 | 0 | 0.10 | 0.55 | 0.4 | 0.0 |
| CR-5 | 100 | 0 | 0.15 | 0.55 | 1.0 | 0.0 |
| CR-6 | 97 | 3 | 0.15 | 0.55 | 0.4 | 0.0 |
| CR-7 | 93 | 7 | 0.15 | 0.55 | 0.4 | 0.0 |
| CR-8 | 100 | 0 | 0.4 | 0.55 | 0.4 | 0.0 |

**CR-1:** 1668g deionized water was added to a mixture of 98.06g Rosin acid potassium salt in water (55%) (Sylvaros RS 200), 32.55g Baykanol PQ (Naphtalenesulfonic acid, polymer with formaldehyde, sodium salt, CAS 9084-06-4 in water (30%)) and 3.78g Marlon A350 (Benzenesulfonic acid, C10-13-alkyl derivs., sodium salts CAS 68411-30-3 in water (60%) and stirred. Subsequently 10.41g KOH prills (87% purity) was added under continuous stirring to form the so-called water phase. When the solution was clear, 0.9g Anthraquinone 2 sulfonic acid sodium salt was added and the mixture deoxygenated with nitrogen for at least 8h.

2.25g Diisopropylxanthogendisulphide (DIXD) was dissolved in 1500g chloroprene. The solution was introduced in a 6 litres double jacket nitrogen flushed reactor together with the water phase. The reactor content was tempered to 44°C under stirring. As soon as the reactor temperature was stabilized, 11.56g of a sulphur dispersion in water (52% sulphur content) was added together with 120g water. The polymerisation was then immediately started by addition of the initiator (3%w Potassium persulphate in water). The addition flow rate was chosen to achieve 75% monomer conversion within about 3h reaction time. When 75% monomer conversion was achieved, the Potassium persulfate solution addition was stopped and 1.1g Hydroquinone in 20ml deionized water was added to the reactor. The reactor temperature was lowered to 20°C. Then an emulsion of a solution of 8.25g DIXD in 74.5g chloroprene in 82.5g water phase was added to the reactor. The non-reacted monomer was removed by steam distillation in a cyclone under reduced pressure (150mbar).

The monomer free latex was neutralized to pH=7.5 with 0.1M HCl in water, frozen to - 20°C and freeze-dried to give the solid polychloroprene.
**CR-2:** Same as for CR 1 except that the sulphur dispersion amount added before starting the polymerisation was 8.67g and the DIXD/Chloroprene/Water phase emulsion which was added after the end of the polymerisation additionally contained 2.81g sulphur dispersion.
**CR-3:** Same as for CR 1 except that the sulphur dispersion amount added before starting the polymerisation was 5.78g and the DIXD/Chloroprene/Water phase emulsion which was added after the end of the polymerisation additionally contained 5.76g sulphur dispersion.
**CR-4:** Same as for CR 1 except that the DIXD amount in chloroprene at the beginning of the reaction was 1.50g.
**CR-5:** Same as for CR 1 except that the sulphur dispersion amount added before starting the polymerisation was 28.85g.
**CR-6:** Same as for CR-1 except that the monomer mixture is composed of 1455g of chloroprene and 45g of dichloro-2,3-butadiene.
**CR-7:** Same as for CR-1 except that the monomer mixture is composed of 1395g of chloroprene and 105g of dichloro-2,3-butadiene.
**CR-8:** Same as for CR 1 except that the DIXD amount in chloroprene at the beginning of the reaction was 6.00g.

### Production, vulcanisation and characterisation of the rubber compositions

An internal mixer GK1.5 from Harburg Freudenberger with 65% filling degree was used. The set temperature was 30°C and mixing was done at 40prm.

The following steps were observed:
0 - 0.5 min = Polymer addition
0.5 - 3.0 min = Carbon black, MgO, stearic acid
3 min = Cleaning and addition of ZnO. Late addition avoids scorch.
4 min = Finish

All further additives were added on a mixing-roll system with rollers cooled to 30°C from Troester (WNU3). The rollers had a diameter 200 mm. A rotation rate and a friction ratio of the rollers were controlled to provide stable sheets.

To achieve homogenisation the sheet was cut three times left and three times right, then folded five times. Mixing was then terminated and the product drawn off in the form of a blanket from the roller. This blanket was vulcanised for 40 min at 170°C in a press.

The following materials were used as provided.

Baypren^{®} 616 VP - copolymer of chloroprene and sulphur, peptisized with diisopropylxanthogenatedisulphide (xanthogen disulphide) with a Mooney viscosity of 48MU. (CAS: 9010-98-4).

Baypren^{®} 611 - copolymer of chloroprene and sulphur, peptised with TETD with a Mooney viscosity of 48MU. (CAS: 9010-98-4).

Non-nucleophilic base - Rhenogran^{®} XLA-60 - 60% synergistic combination of activated amine with retarder, 40% acrylic copolymer and dispersing agents supplied by Rheinchemie (CAS-Number: 6674-22-2), (DBU-Concentration ≥ 25wt.-% - < wt.-40%).

Non-nucleophilic base - 1,4-diazabicyclo[2.2. 2]octane (DABCO) - obtained from Sigma Aldrich (CAS-Number: 280-57-9).

Additive - Regal SRF - carbon black from Cabot confirming to ASTM N772 targets (CAS-Number: 1333-86-4).

Crosslinking agent - Maglite^{®} DE - Magnesium oxide, available commercially from CP Hall (CAS-Number: 1309-48-4).

Crosslinking agent - Zinc Oxide Red Seal from Grillo-Werke AG (CAS-Number: 1314-13-2).

Edenor C18 98-100 - Stearic acid from Oleo solutions (CAS-Number: 57-11-4).

Accelerator - Rhenogran^{®} MBTS-80 - 80 % dibenzothiazyl disulphide supplied by Rheinchemie (CAS-Number: 120-78-5).

Accelerator - Rhenogran^{®} TBzTD-70 - 70 % supplied by Rheinchemie (CAS-Number: 10591-85-2).

Examples: All of the examples characterised in the following Tables. An * after the respective example is according to the present invention.

**Table 2: Vulcanisable compositions in phr**

| | 1 | 2 | 3 | 4* | 5* | 6* | 7* | 8* | 9* | 10* | 11* |
|---|---|---|---|---|---|---|---|---|---|---|---|
| Baypren 616 VP | 0 | 0 | 100 | 100 | 100 | 100 | 100 | 100 | 100 | 100 | 100 |
| Baypren 611 MOONEY 37-49 | 100 | 100 | 0 | 0 | 0 | 0 | 0 | 0 | 0 | 0 | 0 |
| Additive - Regal SRF | 30 | 30 | 30 | 30 | 30 | 30 | 30 | 30 | 30 | 30 | 30 |
| Stearic acid | 0.5 | 0.5 | 0.5 | 0.5 | 0.5 | 0.5 | 0.5 | 0.5 | 0.5 | 0.5 | 0.5 |
| Crosslinking agent - Maglite^{®} DE | 4.1 | 4.1 | 4.1 | 4.1 | 4.1 | 4.1 | 4.1 | 4.1 | 4.1 | 4.1 | 4.1 |
| Rhenogran TBzTD-70 | 0 | 0 | 0 | 0 | 0 | 2 | 2 | 2 | 2 | 2 | 2 |
| ZnO | 5 | 5 | 5 | 5 | 5 | 5 | 5 | 5 | 5 | 5 | 5 |
| DABCO | 0 | 0.5 | 0 | 0.5 | 0.5 | 0.5 | 0.5 | 0 | 0 | 0 | 0 |
| Rhenogran XLA-60 | 0 | 0 | 0 | 0 | 0 | 0 | 0 | 1.67 | 1.67 | 1.67 | 1.67 |
| Rhenogran MBTS-80 | 0 | 0 | 0 | 0 | 1.25 | 0 | 1.25 | 0 | 1.25 | 1.25 | 1.25 |

**Table 3: Mooney viscosity of vulcanisable compositions**

| | 1 | 2 | 3 | 4* | 5* | 6* | 7* | 8* | 9* | 10* | 11* |
|---|---|---|---|---|---|---|---|---|---|---|---|
| ML1+4/100° C (ME) | 66 | 62 | 69 | 61 | 39 | 42 | 35 | 41 | 32 | 36 | 40 |
| Rel. after 10 sec. (%) | 11.9 | 11.3 | 15.4 | 11.4 | 8.94 | 9.23 | 8.32 | 9.05 | 7.49 | 9.56 | 9.05 |
| Rel. after 20 sec. (%) | 8,09 | 7.39 | 11.2 | 7.52 | 5.50 | 5.66 | 4.93 | 5.41 | 4.15 | 6.02 | 5.53 |
| Rel. after 30 sec. (%) | 6.40 | 5.66 | 9.27 | 5.82 | 4.02 | 4.15 | 3.52 | 3.87 | 2.80 | 4.57 | 4.03 |
| Evaluation | 0 | + | 0 | + | ++ | ++ | ++ | ++ | ++ | ++ | ++ |

Through the use of non-nucleophilic base (DABCO or XLA-60) a reduction of Mooney viscosity can be observed for the inventive examples. The reduction in Mooney viscosity if further enhanced if in addition to the non-nucleophilic base (DACBO or XLA-60) an accelerator like MBTS or TBzTD is used. With regard to the evaluation, + means good and ++ means excellent.

**Table 4: Crosslinking density of vulcanisable compositions**

| MDR, 170°C, 40min | 1 | 2 | 3 | 4* | 5* | 6* | 7* | 8* | 9* | 10* | 11* |
|---|---|---|---|---|---|---|---|---|---|---|---|
| Sₘᵢₙ (dNm) | 1.3 | 1.3 | 1.40 | 1.27 | 0.68 | 0.72 | 0.54 | 0.7 | 0.5 | 0.7 | 0.7 |
| Sₘₐₓ (dNm) | 24 | 24 | 16 | 25 | 23 | 23 | 21 | 22 | 19 | 18 | 21 |
| ΔS' | 1.17 | 0.72 | 1.12 | 0.53 | 0.72 | 0.85 | 0.95 | 0.6 | 0.8 | 0.5 | 0.6 |
| ts2 (Min) | 1.22 | 0.73 | 0.97 | 0.57 | 0.73 | 0.87 | 0.95 | 0.6 | 0.8 | 0.5 | 0.6 |
| t10 (Min) | 7.25 | 2.85 | 23.3 | 5.10 | 6.85 | 5.95 | 8.30 | 12.8 | 12.0 | 11.9 | 13.2 |
| t80 (Min) | 14 | 6 | 30.8 | 11.8 | 14.9 | 13.0 | 16.8 | 21.3 | 20.7 | 21.3 | 21.9 |
| Evaluation | 0 | 0 | 0 | + | + | + | + | + | + | + | + |

Using the non-nucleophilic base in combination with chloroprene rubber copolymerised with sulphur and added DIXD not only reduces Mooney viscosity but also increase the crosslink density and the cure speed for the inventive samples. Using the non-nucleophilic base in combination with chloroprene rubber copolymerised with elemental sulphur and added TETD does not result in a change in crosslink density.

**Table 5: Mechanical properties of vulcanised materials**

| | 1 | 2 | 3 | 4* | 5* | 6* | 7* | 8* | 9* | 10* | 11* |
|---|---|---|---|---|---|---|---|---|---|---|---|
| TS (MPa) | 23 | 24 | 23 | 20 | 22 | 22 | 23 | 19 | 21 | 22 | 20 |
| EB (%) | 415 | 427 | 483 | 313 | 394 | 407 | 495 | 370 | 475 | 456 | 393 |
| M 10 (MPa) | 0.6 | 0.8 | 0.6 | 0.8 | 0.7 | 0.7 | 0.6 | 0.7 | 0.6 | 0.7 | 0.6 |
| M 25 (MPa) | 1.3 | 1.5 | 1.1 | 1.5 | 1.4 | 1.3 | 1.2 | 1.2 | 1.1 | 1.2 | 1.3 |
| M 50 (MPa) | 2.1 | 2.3 | 1.6 | 2.5 | 2.2 | 2.0 | 1.9 | 1.9 | 1.7 | 1.9 | 2.0 |
| M 100 (MPa) | 3.6 | 4.0 | 2.7 | 4.4 | 3.7 | 3.4 | 3.1 | 3.3 | 2.8 | 3.2 | 3.4 |
| M 300 (MPa) | 15.8 | 16.2 | 12.2 | 18.9 | 15.6 | 14.7 | 12.6 | 14.6 | 12.0 | 13.8 | 14.7 |
| Hardness (Shore A) | 67 | 70 | 63 | 71 | 69 | 68 | 66 | 66 | 64 | 64 | 67 |
| CS (%) | 23 | 25 | 41 | 24 | 27 | 30 | 33 | 22 | 27 | 24 | 23 |

Using the non-nucleophilic base in combination with chloroprene rubber copolymerised with sulphur and added DIXD reduces the compression set (example 4 vs 3), while using the non-nucleophilic base in combination with chloroprene rubber copolymerised with sulphur and added TETD results in an increase in compression set (example 2 vs 1). M indicates a description of tensile curve, Stress value of an elongation of %(number as indicated).

**Table 6: Goodrich flexometer evaluation**

| MTS at 50°C | 1 | 2 | 3 | 4* |
|---|---|---|---|---|
| dynamic creep (%) | 0.3 | 0.0 | 0.3 | 0.2 |
| Permanent set (%) | 1.2 | 0.8 | 1.2 | 0.8 |
| Internal temperature (°C) | 78 | 106 | 90 | 91 |
| Temperature rise (K) | 17 | 19 | 17 | 14 |

Using the non-nucleophilic base in combination with chloroprene rubber copolymerised with sulphur and added DIXD does not significantly increase the internal temperature and but reduces the temperature rise (example 4 vs 3), while using the non-nucleophilic base in combination with chloroprene rubber copolymerised with sulphur and added TETD results in an increase in internal temperature and also in a temperature rise (example 2 vs 1).

**Table 7: Variation of sulphur content**

| | 12 | 13* | 14* | 15 | 16* | 17* | 18 | 19 | 20 | 21 | 22* | 23* |
|---|---|---|---|---|---|---|---|---|---|---|---|---|
| CR-1 | 100 | 100 | 100 | 0 | 0 | 0 | 0 | 0 | 0 | 0 | 0 | 0 |
| CR-2 | 0 | 0 | 0 | 100 | 100 | 100 | 0 | 0 | 0 | 0 | 0 | 0 |
| CR-3 | 0 | 0 | 0 | 0 | 0 | 0 | 100 | 100 | 100 | 0 | 0 | 0 |
| CR-5 | 0 | 0 | 0 | 0 | 0 | 0 | 0 | 0 | 0 | 100 | 100 | 100 |
| N772 | 30 | 30 | 30 | 30 | 30 | 30 | 30 | 30 | 30 | 30 | 30 | 30 |
| stearic acid | 0.5 | 0.5 | 0.5 | 0.5 | 0.5 | 0.5 | 0.5 | 0.5 | 0.5 | 0.5 | 0.5 | 0.5 |
| MgO | 4.1 | 4.1 | 4.1 | 4.1 | 4.1 | 4.1 | 4.1 | 4.1 | 4.1 | 4.1 | 4.1 | 4.1 |
| ZnO | 5 | 5 | 5 | 5 | 5 | 5 | 5 | 5 | 5 | 5 | 5 | 5 |
| Rhenogran XLA-60 | 0 | 0 | 1.67 | 0 | 0 | 1.67 | 0 | 0 | 1.67 | 0 | 0 | 1.67 |
| Rhenogran MBTS-80 | 0 | 0 | 1.25 | 0 | 0 | 1.25 | 0 | 0 | 1.25 | 0 | 0 | 1.25 |
| DABCO | 0 | 0.5 | 0 | 0 | 0.5 | 0 | 0 | 0.5 | 0 | 0 | 0.5 | 0 |

The amount of sulphur added in the beginning of the polymerisation was varied from 0.4phm to 0.3phm and 0.2phm from CR-1 to 3, CR-5 was polymerised with 1phm of sulphur added in the beginning of the polymerisation.

**Table 8: Mooney reduction depending on variable sulphur content**

| Properties of uncured compound | 12 | 13* | 14* | 15 | 16* | 17* | 18 | 19 | 20 | 21 | 22* | 23* |
|---|---|---|---|---|---|---|---|---|---|---|---|---|
| ML1+4/100°C (ME) | 79 | 66 | 43 | 100 | 88 | 57 | 69 | 121 | 80 | 17 | 17 | 9 |
| Rel. after 10 sec. (%) | 17.0 | 11.7 | 9.0 | 21.5 | 16.3 | 12.4 | 15.1 | 23.2 | 17.9 | 6 | 5 | 6 |
| Rel. after 20 sec. (%) | 12.7 | 7.6 | 5.5 | 16.9 | 11.7 | 8.4 | 11.0 | 18.2 | 13.3 | 5 | 4 | 6 |
| Rel. after 30 sec. (%) | 10.7 | 5.8 | 4.1 | 14.7 | 9.5 | 6.6 | 9.1 | 15.8 | 11.1 | 4.1 | 4.0 | 5.9 |

The amount of added sulphur in the beginning of the polymerisation is important on the Mooney viscosity development together with the non-nucleophilic base. Above 0.2phm a reduction in Mooney viscosity can be observed for experimental results 13*, 14*, 16* and 17*. The Mooney viscosity of chloroprene polymerised with 1phm sulphur added in the beginning is very low, resulting in a sticky, difficult to process material.

**Table 9: Crosslinking and mechanical properties depending on variable sulphur content**

| MDR for 40min/170°C | 13* | 14* | 16* | 17* | 19 | 20 | 22 | 23 |
|---|---|---|---|---|---|---|---|---|
| Sₘᵢₙ (dNm) | 1.5 | 0.8 | 2.1 | 1.2 | 2.7 | 1.7 | 0.2 | 0.1 |
| Sₘₐₓ (dNm) | 23 | 20 | 22 | 19 | 22 | 19 | 28 | 26 |
| ΔS' | 22 | 19 | 20 | 18 | 19 | 17 | 28 | 25 |
| ts2 (Min) | 0.5 | 0.5 | 0.5 | 0.5 | 0.4 | 0.5 | 0.6 | 0.6 |
| t10 (Min) | 0.5 | 0.5 | 0.5 | 0.5 | 0.4 | 0.5 | 0.6 | 0.6 |
| t80 (Min) | 5.4 | 9.2 | 5.1 | 8.7 | 5.2 | 8.5 | 5.4 | 9.9 |
| t90 (Min) | 12.3 | 18.3 | 11.6 | 17.6 | 11.7 | 17.4 | 12.8 | 18.5 |
| TS (MPa) | 21 | 22 | 21 | 22 | 11 | 17 | 18 | 15 |
| EB (%) | 312 | 433 | 301 | 442 | 186 | 318 | 240 | 276 |
| M 10 (MPa) | 0.8 | 0.7 | 0.8 | 0.7 | 0.8 | 0.7 | 0.9 | 0.8 |
| M 25 (MPa) | 1.5 | 1.2 | 1.5 | 1.2 | 1.5 | 1.3 | 1.7 | 1.5 |
| M 50 (MPa) | 2.3 | 1.9 | 2.3 | 1.8 | 2.5 | 2.0 | 2.8 | 2.4 |
| M 100 (MPa) | 4.4 | 3.3 | 4.5 | 3.3 | 4.6 | 3.6 | 5.5 | 4.4 |
| M 300 (MPa) | 20 | 15 | 21 | 15 | - | 16 | - | -- |
| H 23°C (Shore A) | 69 | 65 | 70 | 65 | 70 | 66 | 73 | 72 |
| CS (%) | 25 | 29 | 25 | 28 | 25 | 27 | 28 | 32 |

Sulphur content between 0.2 phm and 1phm Sulphur added at the beginning of the polymerisation result in good tensile strength and compression set

**Table 10: Variation of DIXD**

| | 12 | 13* | 14* | 24 | 25* | 26* | 27 | 28* | 29* |
|---|---|---|---|---|---|---|---|---|---|
| CR-1 | 100 | 100 | 100 | 0 | 0 | 0 | 0 | 0 | 0 |
| CR-4 | 0 | 0 | 0 | 100 | 100 | 100 | 0 | 0 | 0 |
| CR-8 | 0 | 0 | 0 | 0 | 0 | 0 | 100 | 100 | 100 |
| N772 | 30 | 30 | 30 | 30 | 30 | 30 | 30 | 30 | 30 |
| stearic acid | 0.5 | 0.5 | 0.5 | 0.5 | 0.5 | 0.5 | 0.5 | 0.5 | 0.5 |
| MgO | 4.1 | 4.1 | 4.1 | 4.1 | 4.1 | 4.1 | 4.1 | 4.1 | 4.1 |
| ZnO | 5 | 5 | 5 | 5 | 5 | 5 | 5 | 5 | 5 |
| Rhenogran XLA-60 | 0 | 0 | 1.67 | 0 | 0 | 1.67 | 0 | 0 | 1.67 |
| Rhenogran MBTS-80 | 0 | 0 | 1.25 | 0 | 0 | 1.25 | 0 | 0 | 1.25 |
| DABCO | 0 | 0.5 | 0 | 0 | 0.5 | 0 | 0 | 0.5 | 0 |

**Table 11: Mooney reduction with variation of DIXD**

| Properties of uncured compound | 12 | 13* | 14* | 24 | 25* | 26* | 27 | 28* | 29* |
|---|---|---|---|---|---|---|---|---|---|
| ML1+4/100°C (ME) | 79 | 66 | 43 | 70 | 77 | 49 | 35 | 29 | 23 |
| Rel. after 10 sec. (%) | 17.0 | 11.7 | 9.0 | 15.1 | 11.6 | 8.7 | 6.53 | 6.61 | 5.84 |
| Rel. after 20 sec. (%) | 12.7 | 7.6 | 5.5 | 11.0 | 7.6 | 5.2 | 4.33 | 4.90 | 4.33 |
| Rel. after 30 sec. (%) | 10.7 | 5.8 | 4.1 | 9.1 | 5.8 | 3.9 | 3.75 | 4.00 | 3.76 |

**Table 12: Copolymer of chloroprene and DCB**

| | 12 | 13* | 14* | 33 | 34* | 35* | 36 | 37* | 38* |
|---|---|---|---|---|---|---|---|---|---|
| CR-1 | 100 | 100 | 100 | 0 | 0 | 0 | 0 | 0 | 0 |
| CR-6 | 0 | 0 | 0 | 100 | 100 | 100 | 0 | 0 | 0 |
| CR-7 | 0 | 0 | 0 | 0 | 0 | 0 | 100 | 100 | 100 |
| N772 | 30 | 30 | 30 | 30 | 30 | 30 | 30 | 30 | 30 |
| stearic acid | 0.5 | 0.5 | 0.5 | 0.5 | 0.5 | 0.5 | 0.5 | 0.5 | 0.5 |
| MgO | 4.1 | 4.1 | 4.1 | 4.1 | 4.1 | 4.1 | 4.1 | 4.1 | 4.1 |
| ZnO | 5 | 5 | 5 | 5 | 5 | 5 | 5 | 5 | 5 |
| Rhenogran XLA-60 | 0 | 0 | 1.67 | 0 | 0 | 1.67 | 0 | 0 | 1.67 |
| Rhenogran MBTS-80 | 0 | 0 | 1.25 | 0 | 0 | 1.25 | 0 | 0 | 1.25 |
| DABCO | 0 | 0.5 | 0 | 0 | 0.5 | 0 | 0 | 0.5 | 0 |

Addition of 3 and 7 phm of DCB in the polymerisation mix together with chloroprene and 0.4phm of sulphur.

**Table 13: Mooney reduction of polymer with DCB**

| Properties of uncured compound | 12 | 13* | 14* | 33 | 34* | 35* | 36 | 37* | 38* |
|---|---|---|---|---|---|---|---|---|---|
| ML1+4/100°C (ME) | 79 | 66 | 43 | 60 | 53 | 42 | 85 | 68 | 48 |
| Rel. after 10 sec. (%) | 17.0 | 11.7 | 9.0 | 8.82 | 7.44 | 6.05 | 14.67 | 10.4 | 8.47 |
| Rel. after 20 sec. (%) | 12.7 | 7.6 | 5.5 | 5.5 | 4.24 | 3.37 | 10.26 | 6.58 | 5.03 |
| Rel. after 30 sec. (%) | 10.7 | 5.8 | 4.1 | 4.11 | 2.98 | 2.46 | 8.21 | 4.92 | 3.62 |

Similar behaviour of polymer containing sulphur, chloroprene and DCB can be observed together with the non-nucleophilic base. Mooney viscosity is being reduced.

**Table 14: Properties of polymer with DCB**

| MDR for 40min/170°C | 13* | 14* | 34* | 35* | 37* | 38* |
|---|---|---|---|---|---|---|
| Sₘᵢₙ (dNm) | 1.5 | 0.8 | 1.0 | 0.7 | 1.4 | 0.9 |
| Sₘₐₓ (dNm) | 23 | 20 | 26 | 22 | 25 | 20 |
| ΔS' | 22 | 19 | 25 | 22 | 23 | 19 |
| ts2 (min) | 0.5 | 0.5 | 0.5 | 0.5 | 0.4 | 0.5 |
| t10 (min) | 0.5 | 0.5 | 0.5 | 0.5 | 0.4 | 0.5 |
| t80 (min) | 5.4 | 9.2 | 4.8 | 9.8 | 6.4 | 10.6 |
| t90 (min) | 12.3 | 18.3 | 11.7 | 19.3 | 14.1 | 20.1 |
| TS (MPa) | 21 | 22 | 21 | 19 | 19 | 19 |
| EB (%) | 312 | 433 | 308 | 366 | 284 | 399 |
| M 10 (MPa) | 0.8 | 0.7 | 0.8 | 0.7 | 0.7 | 0.6 |
| M 25 (MPa) | 1.5 | 1.2 | 1.5 | 1.3 | 1.5 | 1.2 |
| M 50 (MPa) | 2.3 | 1.9 | 2.5 | 2.0 | 2.4 | 1.8 |
| M 100 (MPa) | 4.4 | 3.3 | 4.6 | 3.4 | 4.6 | 3.1 |
| M 300 (MPa) | 20 | 15 | 20 | 15 | -- | 14 |
| H 23°C (Shore A) | 69 | 65 | 71 | 67 | 70 | 65 |
| CS (%) | 25 | 29 | 21 | 24 | 23 | 23 |

Crosslinking speed and density similar for all polymers, independent of DCB content. Mechanical properties are excellent for all polymers.

Having thus described the present invention and the advantages thereof, it should be appreciated that the various aspects and embodiments of the present invention as disclosed herein are merely illustrative of specific ways to make and use the invention.

The various aspects and embodiments of the present invention do not limit the scope of the invention when taken into consideration with the appended claims and the foregoing detailed description.

What is desired to be protected by letters patent is set forth in the following claims.

## Claims

1. A vulcanisable composition for forming a nitrosamine free sulphur modified polychloroprene vulcanisate, the vulcanisable composition comprising:
- a sulphur-modified polychloroprene copolymer polymerised at least from chloroprene, elemental sulphur and a xanthogen disulphide; and
- a non-nucleophilic base wherein the non-nucleophilic base is a bi-or polycyclic amine base, which comprises two, or more than two, joined rings.

2. The vulcanisable composition according to claim 1 wherein the sulphur-modified polychloroprene vulcanisate is formed in the presence of an at least one accelerator selected from a thiazole compound, a carbamate compound and a thiuram compound or any combination thereof.

3. The vulcanisable composition according to any of claims 1 to 2 wherein the non-nucleophilic base is selected from the group consisting of 1,8-Diazabicyclo[5.4.0]undec-7-ene, 1,4-diazabicyclo[2.2.2]octane, and 1,5-Diazabicyclo[4.3.0]non-5-ene or any combination thereof.

4. The vulcanisable composition according to any of claims 1 to 3 wherein the sulphur-modified polychloroprene copolymer further comprises 2,3-dichloro-1,3-butadiene.

5. The vulcanisable composition according to any of claims 1 to 4 wherein the sulphur-modified polychloroprene copolymer is formed in the presence of elemental sulphur at a start of the polymerisation in an amount of ≥ 0.2 phm, in particular to ≤ 1 phm.

6. The vulcanisable composition according to any of claims 1 to 5 wherein the sulphur-modified chloroprene copolymer is prepared in the presence of the xanthogen disulphide being present in an amount of ≤ 0.4 phm at the start of the polymerisation reaction.

7. The vulcanisable composition according to any of claims 1 to 6 wherein the vulcanisable composition further comprises a vulcanizing agent.

8. A method of manufacturing a nitrosamine free sulphur modified polychloroprene vulcanisate, the method comprising the steps of:
a) polymerising chloroprene in a presence of elemental sulphur and a xanthogen disulphide to form a sulphur-modified polychloroprene; and
b) vulcanising the sulphur-modified polychloroprene formed in step a) in the presence of a non-nucleophilic base to form the nitrosamine free sulphur modified polychloroprene vulcanisate, wherein the non-nucleophilic base is a bi-or polycyclic amine base, which comprises two, or more than two, joined rings.

9. The method according to claim 8 wherein step b) is performed in the presence of an accelerator, in particular selected from at least one of a thiazole compound, a carbamate compound and a thiuram compound.

10. The method according to claim 8 or 9 wherein the non-nucleophilic base is selected from the group consisting of 1,8-Diazabicyclo[5.4.0]undec-7-ene, 1,4-diazabicyclo[2.2.2]octane, and 1,5-Diazabicyclo[4.3.0]non-5-ene or any combination thereof.

11. The method according to any of claims 8 to 10 wherein in step a), sulphur is present in an amount of ≥ 0.2 phm, in particular to < 1 phm at the start of the polymerisation reaction.

12. The method according to any of claims 8 to 11 wherein in step a), the xanthogen disulphide is present in an amount of ≤ 0.4 phm at the start of the polymerisation reaction.

13. The method according to any of claims 8 to 12 wherein step a) is performed in the presence of dichloro-2,3-butadiene as further monomer unit.

14. Vulcanisates formed from the vulcanisable composition according to any of Claims 1 to 7 or by the method according to any of claims 8 to 13.

## Patentansprüche

1. Vulkanisierbare Zusammensetzung zur Bildung eines nitrosaminfreien schwefelmodifizierten Polychloroprenvulkanisats, wobei die vulkanisierbare Zusammensetzung Folgendes umfasst:
- ein schwefelmodifiziertes Polychloropren-Copolymer, mindestens polymerisiert aus Chloropren, elementarem Schwefel und einem Xanthogendisulfid; und
- eine nichtnukleophile Base, wobei es sich bei der nichtnukleophilen Base um eine bi- oder polycyclische Aminbase handelt, die zwei oder mehr als zwei verbundene Ringe umfasst.

2. Vulkanisierbare Zusammensetzung nach Anspruch 1, wobei das schwefelmodifizierte Polychloroprenvulkanisat in Gegenwart mindestens eines aus einer Thiazolverbindung, einer Carbamatverbindung und einer Thiuramverbindung oder einer beliebigen Kombination davon ausgewählten Beschleunigers gebildet wird.

3. Vulkanisierbare Zusammensetzung nach einem der Ansprüche 1 bis 2, wobei die nichtnukleophile Base aus der Gruppe bestehend aus 1,8-Diazabicyclo[5.4.0]undec-7-en, 1,4-Diazabicyclo[2.2.2]octan und 1,5-Diazabicyclo[4.3.0]non-5-en oder einer beliebigen Kombination davon ausgewählt ist.

4. Vulkanisierbare Zusammensetzung nach einem der Ansprüche 1 bis 3, wobei das schwefelmodifizierte Polychloropren-Copolymer ferner 2,3-Dichlor-1,3-butadien umfasst.

5. Vulkanisierbare Zusammensetzung nach einem der Ansprüche 1 bis 4, wobei das schwefelmodifizierte Polychloropren-Copolymer in Gegenwart von elementarem Schwefel am Beginn der Polymerisation in einer Menge von ≥ 0,2 phm, insbesondere bis ≤ 1 phm, gebildet wird.

6. Vulkanisierbare Zusammensetzung nach einem der Ansprüche 1 bis 5, wobei das schwefelmodifizierte Chloropren-Copolymer in Gegenwart des Xanthogendisulfids, das am Beginn der Polymerisationsreaktion in einer Menge von ≤ 0,4 phm vorliegt, gebildet wird.

7. Vulkanisierbare Zusammensetzung nach einem der Ansprüche 1 bis 6, wobei die vulkanisierbare Zusammensetzung ferner ein Vulkanisationsmittel umfasst.

8. Verfahren zur Herstellung eines nitrosaminfreien schwefelmodifizierten Polychloroprenvulkanisats, wobei das Verfahren folgende Schritte umfasst:
a) Polymerisieren von Chloropren in Gegenwart von elementarem Schwefel und einem Xanthogendisulfid zur Bildung eines schwefelmodifizierten Polychloroprens; und
b) Vulkanisieren des in Schritt a) gebildeten schwefelmodifizierten Polychloroprens in Gegenwart einer nichtnukleophilen Base zur Bildung des nitrosaminfreien schwefelmodifizierten Polychloroprenvulkanisats, wobei es sich bei der nichtnukleophilen Base um eine bi- oder polycyclische Aminbase handelt, die zwei oder mehr als zwei verbundene Ringe umfasst.

9. Verfahren nach Anspruch 8, wobei Schritt b) in Gegenwart eines Beschleunigers durchgeführt wird, der insbesondere aus einer Thiazolverbindung, einer Carbamatverbindung und/oder einer Thiuramverbindung ausgewählt wird.

10. Verfahren nach Anspruch 8 oder 9, wobei die nichtnukleophile Base aus der Gruppe bestehend aus 1,8-Diazabicyclo[5.4.0]undec-7-en, 1,4-Diazabicyclo[2.2.2]octan und 1,5-Diazabicyclo[4.3.0]non-5-en oder einer beliebigen Kombination davon ausgewählt wird.

11. Verfahren nach einem der Ansprüche 8 bis 10, wobei in Schritt a) Schwefel am Beginn der Polymerisationsreaktion in einer Menge von ≥ 0,2 phm, insbesondere bis < 1 phm, vorliegt.

12. Verfahren nach einem der Ansprüche 8 bis 11, wobei in Schritt a) das Xanthogendisulfid am Beginn der Polymerisationsreaktion in einer Menge von ≤ 0,4 phm vorliegt.

13. Verfahren nach einem der Ansprüche 8 bis 12, wobei Schritt a) in Gegenwart von Dichlor-2,3-butadien als weiterer Monomereinheit durchgeführt wird.

14. Vulkanisate, gebildet aus der vulkanisierbaren Zusammensetzung nach einem der Ansprüche 1 bis 7 oder durch das Verfahren nach einem der Ansprüche 8 bis 13.

## Revendications

1. Composition vulcanisable pour la formation d'un vulcanisat de polychloroprène modifié par du soufre sans nitrosamine, la composition vulcanisable comprenant :
- un copolymère de polychloroprène modifié par du soufre polymérisé au moins à partir de chloroprène, de soufre élémentaire et d'un disulfure xanthogène ; et
- une base non nucléophile, la base non nucléophile étant une base de type amine bicyclique ou polycyclique, qui comprend deux, ou plus de deux, cycles joints.

2. Composition vulcanisable selon la revendication 1, le vulcanisat de polychloroprène modifié par du soufre étant formé en la présence d'au moins un accélérateur choisi parmi un composé de thiazole, un composé de carbamate et un composé de thiurame ou une quelconque combinaison correspondante.

3. Composition vulcanisable selon l'une quelconque des revendications 1 à 2, la base non nucléophile étant choisie dans le groupe constitué par 1,8-Diazabicyclo[5.4.0]undéc-7-ène, 1,4-diazabicyclo[2.2.2]octane, et 1,5-Diazabicyclo[4.3.0]non-5-ène ou une quelconque combinaison correspondante.

4. Composition vulcanisable selon l'une quelconque des revendications 1 à 3, le copolymère de polychloroprène modifié par du soufre comprenant en outre du 2,3-dichloro-1,3-butadiène.

5. Composition vulcanisable selon l'une quelconque des revendications 1 à 4, le copolymère de polychloroprène modifié par du soufre étant formé en la présence de soufre élémentaire à un début de la polymérisation en une quantité de ≥ 0,2 phm, en particulier jusqu'à ≤ 1 phm.

6. Composition vulcanisable selon l'une quelconque des revendications 1 à 5, le copolymère de chloroprène modifié par du soufre étant préparé en la présence du disulfure xanthogène qui est présent en une quantité de ≤ 0,4 phm au début de la réaction de polymérisation.

7. Composition vulcanisable selon l'une quelconque des revendications 1 à 6, la composition vulcanisable comprenant en outre un agent de vulcanisation.

8. Procédé de fabrication d'un vulcanisat de polychloroprène modifié par du soufre sans nitrosamine, le procédé comprenant les étapes de :
a) polymérisation de chloroprène en une présence de soufre élémentaire et d'un disulfure xanthogène pour former un polychloroprène modifié par du soufre ; et
b) vulcanisation du polychloroprène modifié par du soufre formé dans l'étape a) en la présence d'une base non nucléophile pour former le vulcanisat de polychloroprène modifié par du soufre sans nitrosamine, la base non nucléophile étant une base de type amine bicyclique ou polycyclique, qui comprend deux, ou plus de deux, cycles joints.

9. Procédé selon la revendication 8, l'étape b) étant réalisée en la présence d'un accélérateur, en particulier choisi parmi au moins l'un parmi un composé de thiazole, un composé de carbamate et un composé de thiurame.

10. Procédé selon la revendication 8 ou 9, la base non nucléophile étant choisie dans le groupe constitué par 1,8-Diazabicyclo[5.4.0]undéc-7-ène, 1,4-diazabicyclo[2.2.2]octane, et 1,5-Diazabicyclo[4.3.0]non-5-ène ou une quelconque combinaison correspondante.

11. Procédé selon l'une quelconque des revendications 8 à 10, dans l'étape a), du soufre étant présent en une quantité de ≥ 0,2 phm, en particulier jusqu'à < 1 phm au début de la réaction de polymérisation.

12. Procédé selon l'une quelconque des revendications 8 à 11, dans l'étape a), le disulfure xanthogène étant présent en une quantité de ≤ 0,4 phm au début de la réaction de polymérisation.

13. Procédé selon l'une quelconque des revendications 8 à 12, l'étape a) étant réalisée en la présence de dichloro-2,3-butadiène en tant que motif monomérique supplémentaire.

14. Vulcanisats formés à partir de la composition vulcanisable selon l'une quelconque des revendications 1 à 7 ou par le procédé selon l'une quelconque des revendications 8 à 13.
